Europäisches Patentamt

European Patent Office

Office européen des brevets

(19)

(11) Publication number: **0 168 537 B1**

## EUROPEAN PATENT SPECIFICATION

(12)

(45) Date of publication of patent specification: **02.05.91**

(51) Int. Cl.⁵: **F25C 1/00**, F25B 29/00, F25D 17/02

(21) Application number: **84305987.4**

(22) Date of filing: **31.08.84**

Divisional application 88121257.5 filed on 31/08/84.

(54) Ice making machine.

(30) Priority: **17.07.84 US 631952**

(43) Date of publication of application:
**22.01.86 Bulletin 86/04**

(45) Publication of the grant of the patent:
**02.05.91 Bulletin 91/18**

(84) Designated Contracting States:
**AT BE CH DE FR GB IT LI LU NL SE**

(56) References cited:
FR-A- 2 491 607
US-A- 2 259 841
US-A- 3 328 972
US-A- 4 341 085

(73) Proprietor: **Sunwell Engineering Company Limited**
**18 Killaloe Road Unit 4**
**Concord Ontario, L4K 1C8(CA)**

(72) Inventor: **Goldstein, Vlad**
**120 Torresdale Avenue Apt. 814**
**Willowdale Ontario, M2R 3N7(CA)**

(74) Representative: **Geldard, David Guthrie et al**
**URQUHART-DYKES AND LORD 5th Floor,**
**Tower House Merrion Way**
**Leeds, LS2 8PB West Yorkshire(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 168 537 B1

EP 0 168 537 B1

## Description

This invention relates to an apparatus and method for the continuous manufacture of ice and to thermal storage systems utilising ice as a storage medium.

In today's society vast quantities of ice are used in the preservation and procesing of food products. By way of example it is considered that two pounds of ice are required for each pound of fresh poultry that is retailed. The fishing industry, the dairy industry and the fruit and vegetable industry are also large consumers of ice. service industries such as hotels, restaurants and hospitals also use large quantities. Further, ice is consumed in large amounts in many manufacturing industries.

The manufacture of ice is, therefore, of itself, an important industry. A good portion of ice manufactured today is manufactured in blocks on a batch basis. This is a relatively inefficient method. It is labour oriented and time conusming because the large blocks of ice produced take up to 48 hours to form. Inefficiency is increased by the requirement to use heat to melt the bond between the ice and the evaporator. The cost of providing this heat in the harvesting step alone contributes substantially to the inefficiency of the process. Notwithstanding these inefficiencies, however, the method continues to be used.

There are also continuous methods of making ice in current use with mixed success. In the continuous methods of making ice presently used, ice is formed from water on the walls of an evaporator from which it must be broken away by a rotating auger. Variations of bond strength and irregular patterns of ice formation have caused an irregular torque requirement for the auger shaft drive. The irregularity of this torque requirement has been such that many attempts at evaporator designs for continuous ice making machines have failed.

A further use for ice is in thermal storage heat exchangers which are commonly used in heat pump systems such as air conditioning systems in order to shift the loads whch are applied to the system to achieve load leveling and avoid the need to provide a pump which is designed to meet the requirements when maximum load requirements are only required for a limited period of its day-to-day operation.

Heat pump system which incorporate a heat source, a heat sink and a thermal storage heat exchanger are well known. In United States Patent 433,412 dated June 15, 1982, a cooling system is disclosed in which an ice slurry is circulated as the secondary refrigerant. A motor driven agitator is provided in the collection means for maintaining the ice in a slurry and this slurry is circulated through the system.

To maintain the ice in a slurry form, it is necessary to prevent a high concentration of ice in the collection device and as a result, the efficiency of the collection device is somewhat limited.

It is known to take a mixture that is at less than eutectic concerntration, contain it in a container, agitate the mixture, and cool the sidewall of the container to crystallize water in the solution and concentrate the remainder. Such a general method is the basis for making ice cream. The method has also been proposed to be used for the concentration of the eutectic solution in the case where the solution is, for example, brewed coffee or orange juice. Such a proposal is found in US Patents 3328972 and 3328058 to Svanoe.

According to a first aspect of the present invention there is provided a method for continuously making ice in a container having a wall and means for continuously cooling said wall of the container, comprising the steps of:

making an aqueous solution wherein the solute is nontoxic and the initial concentration is less than the eutectic concentration;

containing the solution within said container, the solution being in heat exchange relation with the wall of the container;

continuously cooling the wall of the container to cool the layer of solution immediately adjacent the side wall no more than $1\,^{\circ}C$ below its freezing point with a refrigerant at a rate of at least $4.5 \times 10^4 KWm^{-2}$ (4000 BTU.ft$^{-2}$hr$^{-1}$)

wherein a blade (158) is continuously moved across the wall to carry the cooled layer of solution at said wall towards the centre of the container, the rate of movement of the blade across said wall being fast enough to carry the cooled layer of solution at the walls towards the centre of the container as aforesaid before the cooled layer is crystallised into a layer of ice whereby to maintain the temperature of the solution substantially uniformly throughout the container below its freezing point and form ice crystals of harvestable size suspended throughout the body of the mixture in the container;

harvesting ice crystals from suspension in said solution; and

continuously replenishing said solution in said container as said ice crystals are removed, as disclosed in the US-A-2259 841, and further characterised in that the blade is moved in close contact with said wall.

According to a second aspect of the present invention an ice making machine comprises a housing to receive a

solution from which ice is to be made and having an outlet to making machine comprises a housing to

2

receive a solution from which ice is to be made and having an outlet to permit the egress ice from said housing, a heat exchanger located within said housing and having a coolant inlet and a coolant outlet to permit flow of coolant to extract heat from said solution at a rate of 4.5 x10⁴ KWm⁻²(4000 BTU.ft⁻²hr⁻¹) and including at least one heat exchange surface separating coolant from said solution, a container in said housing to fill substantially said housing and cover said heat exchange surface, wherein the machine further comprises blade means movable about an axis to move across said surface, and drive means operable upon said blade means to drive said blade means across said surface at a speed such that successive passes of said blade means remove a cooled layer prior to crystallization of ice on said surface, said blade means being configured to discharge fluid from said surface into the body of fluid in said housing to maintain a substantially uniform temperature therein, as disclosed in the US-A-2259841, and further characterised in that the blade means is moveable in close contact with said surface.

This process produces ice in a very efficient manner and in a form that is suitable for most subsequent uses.

One apparatus that is conventional but may be utilised in a novel manner for this process has a generally cylindrical heat exchanger surface which is scoured by an agitator rotating about an axis generally parallel to the heat exchanger surface. Whilst such an apparatus operating under the above process has proven successful when compared with previous attempts to produce ice, the expansion of the apparatus onto a larger scale does present certain problems. Firstly, the surface area presented by the cylindrical wall is limited as the volume of the apparatus increases as the square of the radius, whereas the surface area only increases in proportion to the radius. Further the cylindrical wall must be of relatively thin gauge for maximum heat transfer efficiency which is inconsistent with the structural requirements of the apparatus. The apparatus is not susceptible to a modular expansion to suit differing requirements which detracts from its commercial viability.

A thermal storage heat exchanger of high efficiency may be provided by separating ice from the liquid phase refrigerant in a thermal storage heat exchanger so as to form a porous ice bed and a bath of secondary refrigerant within the thermal storage heat exchanger. This enables the accumulation of a dense porous ice bath during the cooling stage and through which the heated refrigerant can be passed in order to recover the stored energy during the peak cooling demand condition.

A refrigerant which is suitable for use in the system is a secondary refrigerant in the form of a binary solution having a concentration which is below its eutectic concentration.

A continuous supply of a partially frozen refrigerant solution in which fine ice particles are retained in suspension, may be generated by utilising an ice making method and apparatus and an ice making machine of the type described above.

Embodiments of the invention will now be described by way of example only with reference to the accompanying drawings in which:

Figure 1 is a schematic representation of a heat pump system.

Figure 2 is a schematic illustration of a heat sink suitable for use in super cooling a binary solution.

Figure 3 is a diagram illustrating a temperature concentration curve of an aqueous solution suitable for use as a secondary refigerant.

Figure 4 is a sectional view of an alternative embodiment of an ice making machine.

Figure 5 is a view on the line 5-5 of an ice making machine shown in Figure 4.

Figure 6 is an exploded perspective view showing schematically the arrangement of heat exchangers and agitators shown in the machine of Figure 4.

Figure 7 is an schematic view of a further alternate embodiment of an ice making machine.

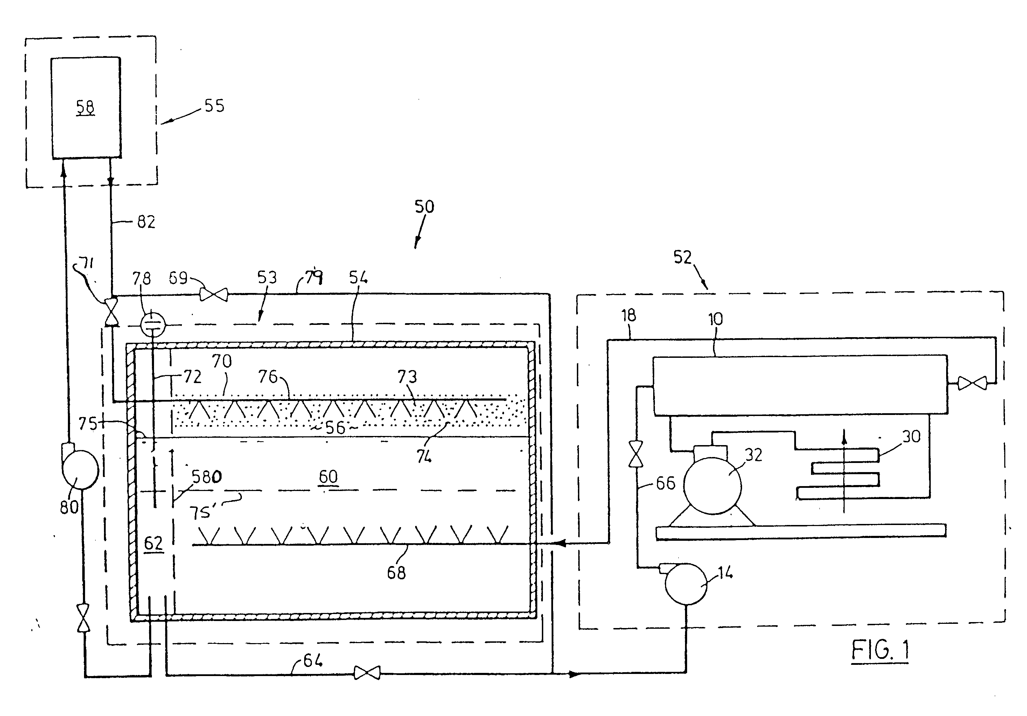

With reference to Figure 1 of the drawings a heat pump 50 consists of an ice generator generally identified by the reference numeral 52, a heat source generally identified by reference numberal 55 and a thermal storage heat exchanger generally identified by the reference numeral 53. Output from the ice generator 52 is conveyed through output line 18 to a heat exchanger tank 54.

The embodiment illustrated, the heat source 55 is in the form of a heat load device 58 which may be a heat exchanger in the form of a cooling coil, chiller or the like.

The thermal storage heat exchanger 53 comprises a storage tank 54 within which a storage chamber 56 is formed. A barrier wall 580 serves to divide the storage chamber 56 into a first compartment 60 and a second compartment 62. The barrier wall 580 is porous and serves to permit liquid phase secondary refrigerant to pass from the compartment 60 into the compartment 62 while preventing the passage of ice particles therebetween.

During the thermal storage phase of operation, a circulating pump 14 withdraws liquid phase secondary refrigerant from the second compartment 62 through a line 64 and discharges it under pressure through line 66 into a freezing cylinder 10 of the ice generator 52. The partially frozen solution containing the ice particles is discharged from the ice generator 52 through line 18 and enters the first compartment 60 through a return header 68 which is disposed in the lower end of the first compartment 60. The ice particles will float toward the surface 70 of the body of secondary refrigerant which is stored within the storage chamber 56 where they will accumulate to form a porous ice bed 74.

By reason of the fact that the secondary refrigerant is an aqueous solution, the ice particles will not bridge to form a solid ice mass and consequently the ice bed which is formed, will be porous. This condition will remain even when the ice bed is compacted as a result of its buoyancy to form a compact ice bed which may substantially fill the chamber 60.

In order to avoid a situation where an excessive amount of ice is accumulated in the storage chamber 60, a liquid level sensing device 78 is provided which has a probe 72 exending into the compartment 62. When the level of liquid in the compartment 62 drops below a predetermined level such as that indicated by the broken line 75, the sensor 78 will operate to deactivate the ice generator 52.

Liquid phase refrigerant is withdrawn from the second compartment 62 by means of a circulating pump 80 of the heat source and it is circulated through the heat exchanger 58. A valve 71 is provided in the output line 82 of the heat exchanger 58 to control flow of the heated refrigerant to the return header 76 of the thermal storage heat exchanger. A bypass line 79 is connected between the return line 82 and the circulating pump 14 of the ice generator with a valve 69 to control flow. This circuit is made operational during high load demand periods and may be used to moderate the cooling effect.

The return header 76 is arranged to discharge the heated liquid phase refrigerant into contact with the ice bed such that the heated refrigerant must pass through at least a major portion of the ice bed before it can be withdrawn from the first compartment 60, thus ensuring that it is cooled by contact with the ice bed. The porous nature of the ice bed is such that the heated refrigerant will permiate the ice bed to thereby achieve an efficient heat exchange between the ice bed and the refrigerant.

A secondary refrigerant suitable for use in the system may be a brine solution having a 5% to 10% concentration. Solutions other than brine could be used. The solvent should, of course, be water based to make ice but the solute could be any nontoxic material that has a suitable eutectic characteristic. Substituted for salt might be glycerine, propylene glycol, ethanol or calcium chloride.

Alternatively, the thermal storage medium is an aqueous solution having a glycol concentration in the range of 3% to 10% by weight. A suitable 10% glycol thermal storage medium may have the following properties:

| | |
|---|---|
| SPECIFIC HEAT | $4.10$ kJ/kg$^\circ$C$^{-1}$ ($0.982$ BTU/LB/$^\circ$F) |
| FREEZING POINT | APPROX $-3^\circ$C ($27^\circ$F) |
| THERMAL CONDUCTIVITY $-3^\circ$C ($27^\circ$F) | $4.4 \times 10^{-7}$ W/m$^2$$^\circ$C ($0.309$ BTU/HR-FT$^2$/$^\circ$F/FT) |
| VISCOSITY $-3^\circ$C ($27^\circ$F) | $2.8 \times 10^{-3}$ Ns/m$^2$ |
| DENSITY | $1035$ kgm$^{-3}$ ($8.77$ LB/IMP. GAL.) |

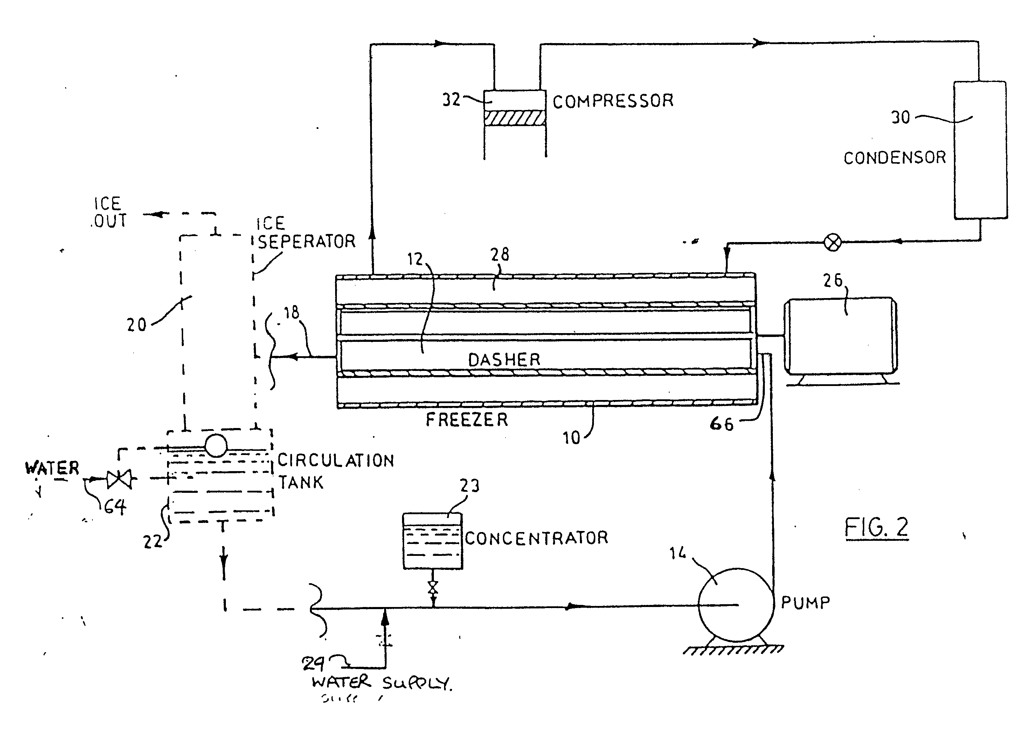

The ice generator 52 is shown in further detail in Figure 2 of the drawings, and includes a freezing cylinder 10 which has a dasher chamber 12 through which the secondary refrigerant is continuously circulated by means of a pump 14. The refrigerant enters the chamber from line 66 and is cooled to be partially frozen to generate a partially frozen solution in which fine ice particles are retained in suspension. The mixture is then discharged through line 18 to the thermal storage heat exchanger 53.

A tank 23 containing concentrated solute is fed into line 66 to add solute to the system as required and a water feed line 24 is provided to replace water removed as ice to maintain the desired concentration of the secondary refrigerant.

Within the dasher chamber 12, a scouring paddle is continuously rotated by motor 26 to scour the sides of the chamber and to prevent an ice build-up on them. The scouring paddle is of a standard design in these machines. The dasher chamber is surrounded by a jacket 28 to which a condensed refrigerant is continuously supplied from condenser 30. The refrigerant evaporates in the jacket and as it does so, it cools the secondary refrigerant in the chamber to form the ice particles. The expanded refrigerant travels from the jacket to the compressor 32 where it is compressed and delivered to the condenser for continuous recycling as in a conventional refrigeration cycle. There is no discussion of ice separation etc., i.e. after the ice flow from the dasher.

As indicated, the freezer, dasher and scouring paddle and associated refrigerant circuit are standard and well known pieces of equipment and their structures are not therefore described in detail.

A secondary refrigerant suitable for use in the system may be a brine solution having a 5% to 10% concentration. Solutions other than brine could be used. The solvent should, of course, be water based to make ice but the solute could be any nontoxic material that has a suitable eutectic characteristic. Substitutes for salt might be glycerine, propylene glycol, ethanol or calcium chloride. Alternatively, the thermal storage medium is an aqueous solution having a glycol concentration in the range of 3% to 10% by weight. A suitable 10% glycol thermal storage medium may have the following properties:

SPECIFIC HEAT $\quad\quad\quad$ $4.10$ kJ kg$^{-1}$ K$^{-1}$ (0.982 BTU/LB/$^{\circ}$F)

FREEZING POINT $\quad\quad\quad$ APPROX -3$^{\circ}$C (27$^{\circ}$F)

THERMAL CONDUCTIVITY $\quad$ $4.4 \times 10^{-7}$ W/m$^{2\circ}$C
-3$^{\circ}$C (27$^{\circ}$F) $\quad\quad\quad$ (0.309 BTU/HR-FT$^2$/$^{\circ}$F/FT)

VISCOSITY -3$^{\circ}$C (27$^{\circ}$F) $\quad$ $2.8 \times 10^{-3}$ Ns/m$^2$

DENSITY $\quad\quad\quad\quad$ 1035 kgm$^{-3}$ (8.77 LB/IMP. GAL.)

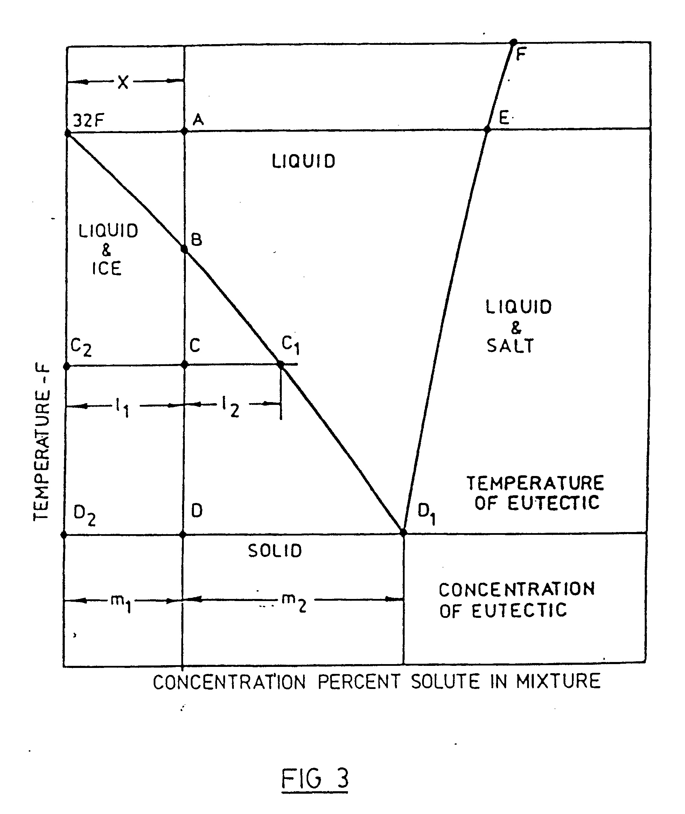

To assist in an understanding of the manner in which ice is generated by the ice generator 52 reference may be had to Figure 3 of the drawings, which show characteristic curves of a brine mixture suitable for use as a secondary refrigerant in which the solvent is water and the solute is NaCl.

This solution will freeze at the eutectic temperature or temperature of eutectic indicated in the drawing. The physical phenomena that occur as the temperature of such a solution is cooled toward the freezing point depend upon its concentration. If the concentration is represented by a point to the left of the point $D_1$ of the curve, ice crystals may form and as a result the concentration of the solvent in the solute increases as the freezing temperature is approached.

The temperature represented by the point D on the curve is known as the eutectic temperature and the concentration represented by the point $D_1$ on the curve is known as the eutectic concentration.

Referring to Figure 3, if a solution of concentration "x", less than the eutectic, at a temperature above 0$^{\circ}$C (32$^{\circ}$F), is cooled, it will not solidify when 0$^{\circ}$C (32$^{\circ}$F) is reached (point A), but will continue to cool as a liquid until point B is reached. At this point, ice crystals of pure water will begin to form, accompanied by removal of their latent heat. This increases the concentration of the residual solution. As the temperature is lowered, these crystals continue to form, and the mixture of ice crystals and brine solution forms a slush. When point C is reached, there is a mixture of ice crystals $C_2$, and brine solution of concentration $C_1$, in the proportions of $l_1$ parts of brine to $l_2$ parts of ice crystals in ($l_1$ + $l_2$) parts of mixture. When the process has continued to point D, there is a mixture of $m_1$ parts of eutectic brine solution $D_1$, and $m_2$ part of ice $D_2$, all of the eutectic temperature. As more heat is removed, the $m_1$ parts of eutectic brine freeze at uniform temperature until all latent heat is removed. The frozen eutectic is a mechanical mixture of salt and frozen water, not a solution, and consequently the latent heat must be corrected for the heat of solution. If this is positive, it decreases effective latent and heat if negative, it increases the effective latent heat.

If the initial solution concentration is greater that the eutectic, salt instead of water freezes out as the temperature is lowered, and the concentration decreases until, at the eutectic temperature, eutectic concentration is reached. In brines used as refrigerating fluid, salt sometimes freezes out because its concentration is too high. This is undesirable when ice is to be generated and therefore when using brine as the secondary refrigerant a concentration of the brine less than the eutectic and preferably about point B on the eutectic curve is maintained.

Applying this principle to the apparatus shown in Figures 1 and 2, the secondary refrigerant is not cooled to the eutectic temperature but is maintained at a temperature at which ice will form.

As ice is formed, the ice and the concentrated mixture form a pumpable slush-like composition which is forced into thermal storage heat exchanger 53. If necessary, water is added to the mixture that is returned to the dasher chamber of the freezer from a supply 24 to maintain the desired concentration of the mixture. Water is preferably added at a constant rate on a continuous basis but it can be added at intervals provided that the concentration of the secondary refrigerant does not get too high. If the concentration gets too high the process becomes less efficient and if it becomes so high that it passes the eutectic point salt or other solute will be deposited in the tank. As concentration gets high ice yield gets low. If the concentration is too low one gets too much ice for easy mechanical operation of the unit.

Because a certain amount of brine will be removed with the ice and provision is made for maintaining salt strength with concentrator 23. It can be operated to add salt as required.

The cylinder 10 is an especially efficient ice making device because it employs an efficient heat transfer from the refrigerant to the water that is formed into ice. As the water freezes to take up its heat of crystalization, heat is taken up around the entire surface of the crystal that forms. It represents a very large surface area per unit of water.

To avoid the formation of a layer of ice on the wall of the cylinder 10, which would tend to reduce the heat transfer surface of the ice, the scouring paddle operates at a speed that is fast enough to carry the cooled layer of mixture at the side wall towards the centre of the container before the cooled layer crystallizes on the side wall of the container. The paddle tends to move the cooled surface layer in a spiral path towards the longitudinal central axis of the chamber whereby it mixes with the general body of mixture in the chamber and cools the general body of mixture to form ice crystals throughout the body of the mixture. The speed will vary with equipment design and operating conditions but with two scouring blades and cylindrical chamber having a diameter of about 7.5 cm (3 inches) a scouring paddle rotation of about 350 r.p.m. was found satisfactory.

The transformation of water from the liquid to the crystal or solid state takes place suddenly and requires a very substantial amount of energy. The liquid brine must be cooled below its freezing point before crystallization will take place. It is so cooled in a surface layer on the side of the chamber but in the interval before crystallization takes place the subcooled surface layer is moved by the rotating scouring paddle from the side wall of the container towards the centre of the container. The cooled liquid thus removed from the side wall surface of the chamber crystallizes into ice on the centers of crystallization present in the liquid. Thus, the brine acts a secondary refrigerant in the formation of ice throughout the body of the mixture.

The paddles rotate around the heat exchange wall of the chamber and preferably form a scoop angle therewith of about $45°$ in the direction of rotation to force the cooled liquid towards the centre of the chamber on a continuous basis.

As an example, a typical heat exchange chamber having a diameter of 7.5 cm (3 inches) has a heat transfer coefficient between the brine and refrigerant of $2.9 \times 10^5$ kWm$^{-2}$K$^{-1}$ (500 BTU's per hour per square foot per degree Farenheit) and the temperature difference between the refrigerant and the brine is $5.6°$ C ($10°$ F).

Thus, the capacity of the unit is 500 x 10 = 5000 BTU's per hour per square foot of chamber wall (15750Wm$^{-2}$).

The blades in the unit rotate and scour the sides of the chamber 350 times per minute and there are two of them so that the dwell time of the surface layer of mixture at the side wall of the chamber is

$$\frac{1}{350 \times 2} = 0.00143 \text{ minutes} = 0.000024 \text{ hours.}$$

The heat given up by the brine mixture to the heat exchange wall in this time is 5000 x 0.000024 = 0.120 BTU's per hour per rotation of the blade per square foot (0.38 W/m²/rotation).

To form ice requires 150 BTU's per pound of ice (97 W-h/kg).

Thus in one rotation of the paddle there is sufficient heat exchange to form 0.0119/150 = 0.00079 pounds of ice per square foot of chamber wall (0.004kgm$^{-2}$).

Ice at 28° F has a density of 57.3 lbs per cubic foot (917kgm$^{-3}$). Assuming that 0.00079 lbs per square foot (0.004kgm$^{-2}$) of ice form on each rotation of the auger the maximum thickness of the ice layer before removal from the side of the chamber is .00079/57.3 = 0.000013 inches, ($3.3 \times 10^{-7}$m). This is not enough to constitute an ice layer.

The diameter of the ice crystals harvested from the unit are between 0.005 and 0.007 cm (.002 and .003 inches). This is 154 to 384 times the thickness of ice that could be formed on the wall between scouring so that it is clear that with this rate of scouring crystals cannot grow to a harvestable size on the side wall of the heat exchanger. The 0.09 seconds that the brine contacts the wall is not sufficient for crystal formation.

The mixture adjacent the cooling surface of the container that is subcooled in this method is about 0.2°C lower than the mixture freezing point. The heat given up by the brine to the heat exchanger is 3.4 x $10^{-5}$ KWh (0.119 BTU's) per rotation of the blade per square foot of heat exchanger area. This amount of heat transfer represents a subcooling of the mixture to about 0.2°C below its freezing point. Thus, with the ice generator shown in Figure 2, the subcooled layer is of infinitesimal thickness as noted above. The subcooled layer is removed as it is formed and at a fast rate so that apart from this very small volume the temperature is substantially the same throughout most of the volume of the container. It is more conductive to good crystal growth throughout the container for harvesting.

The scouring rate will vary with equipment and capacity but in every case the idea is to scour at a rate that avoids cooling substantially below the freezing point at the surface and crystal growth on the side of the heat exchanger chamber whereby to promote crystal growth and formation throughout the body of the mixture.

The mechanical scouring of the surface will achieve a high scouring rate capable of preventing crystal growth on the container wall. It gives a good yield of ice crystals. It will be apparent that for a given piece of equipment the yield of ice will increase with temperature rate of heat transfer. If the rate of heat transfer from the container wall to the mixture tends to be less than 1.2 KWh (4000 BTU) per 0.092 m² (square foot) per hour of container wall the method becomes inefficient. High ice output for a given size piece of equipment is the key to successful operation. Rates of heat transfer of between 126 and 157 KWhm$^{-2}$ - (4000 and 5000 BTU/ft²h) are contemplated. The higher the rate the more efficient the operation as to capacity.

This method further achieves a vast improvement in machine capacity over a method wherein the crystals are permitted to grow on the wall of the chamber and are then harvested by scraping them from the wall with a lower speed auger. With such a method the temperature of the bulk of the mixture is always substantially above freezing and formation of ice crystals takes place only on the limited area of the wall of the chamber. It is not possible to form ice crystals in the bulk of the mixture that is above freezing temperature.

Solutions other than brine could be used. The solvent should, of course, be water based to make ice but the solute could be any nontoxic material that has a suitable eutectic characteristic. Substitutes for salt might be glycerine, propylene glycol, ethanol or calcium chloride.

In addition to those secondary refrigerants identified on page 6, a proprietary binary solution containing water and emulsifying, antibacterial, antifungal and anticorrosive agents has been used to generate ice partices having a diameter of about 0.005 to 0.013 cm (0.002 to 0.005 inches). The liquid also has controlled amounts of alcohol or glycol (for thermal storage applications) so that the working temperature may be set at - 2.2°C (28°F). The ice crystals remain separated and do not form solid blocks of ice because the emulsifier prevents them from agglomerating in the binary solution. Since they do remain separated, the ice crystals have a higher heat transfer coefficient than solid ice and require no space-stealing freezer tubes in the storage tank and do not "bridge" in storage like conventional ice does.

The ice crystals grow throughout the liquid rather than from the wall outward in a layer. Crystals that form near the wall may attach themselves to the wall but they are removed from the wall as the blades rotate. The growth throughout the liquid is achieved by prevention of larger build up at the cooled surface by mechanical scouring at a rate so that the temperature at the wall is not more than one degree Centigrade below freezing temperature and is preferably no more than 0.2°C less than freezing temperature.

The foregoing example is of a subcooling of about 0.2°C . The subcooling throughout the mixture cannot be more than this. The amount of subcooling with this invention is necesarily small because the subcooled layer must be removed before it grows to any appreciable size. Subcooling up to 1°C at the surface is contemplated. Greater subcooling than this would result in poor heat transfer.

The unit with a chamber diameter of three inches and three feet in length referred to above has been operated to produce 400 pounds of ice per hour (4320kg/day).

Whilst the ice generator has been described with reference to the heat pump 50 it will be appreciated that it may be used as a supply of ice for other purposes such as food preservation. In this case a separator 20 indicated in ghosted outline in Figure 2 would be used to separate the solution from the ice and hold the solution in a tank 22. Water would then be applied directly to the tank rather than to the return line 64.

Separation of ice from the slush can be done many ways including centrifugal separation as will be apparent to those skilled in the art.

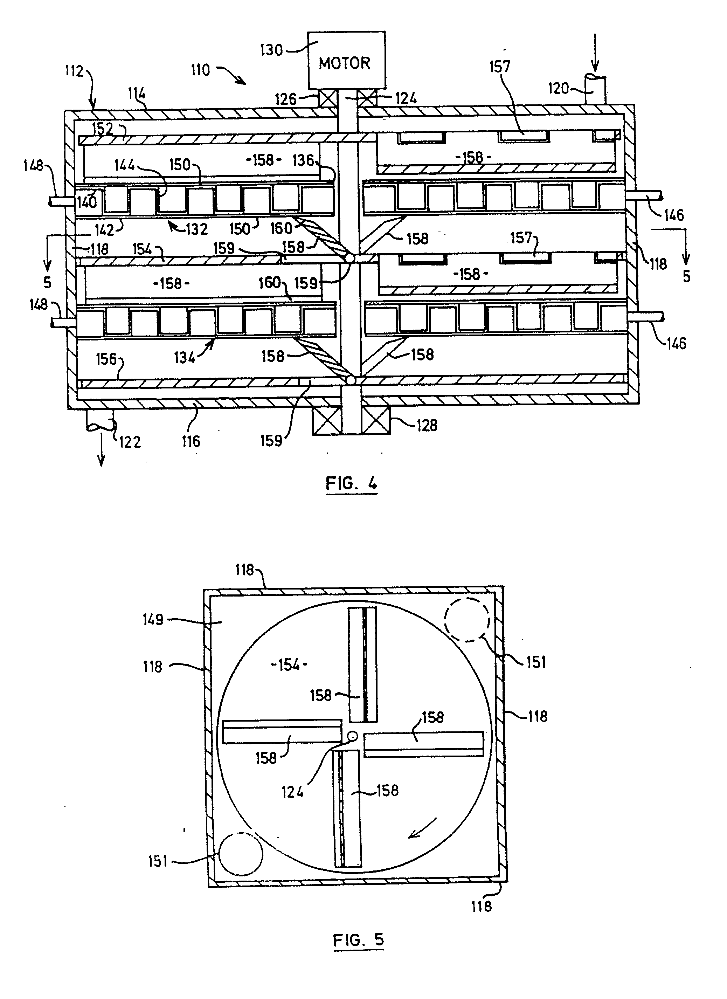

An alternative form of ice generator is shown in figures 4 to 6. The ice making machine 110 includes a housing 112 having upper and lower end plates 114, 116 respectively and side walls 118. The end plates 114, 116 are square when viewed in plan and co-operate with the side walls 118 to define an enclosed housing. The housing 112 is preferably made from an insulated material to reduce the heat transfer across the walls 114, 116, 118.

An inlet 120 is provided on the upper plate 114 to receive the secondary refrigerant, and an outlet 122 is provided in the lower plate at a diametrically opposite location. Thus, fluid entering the inlet 120 is forced to traverse the housing 112 to reach the outlet 122.

An agitator shaft 124 extends through the housing 112 between the plates 114 and 116 and is rotatably supported at opposite ends by bearings 126, 128 located exteriorly of the housing. The shaft 124 is driven by a motor 130 that is supported on the upper plate 114.

A pair of heat exchanger assemblies 132, 134 is located in the housing 112. The heat exchanger assemblies extend between opposite peripheral walls 118 generally parallel to the end walls 14, 116 and normal to the axis of rotation of the shaft 124. Each of the heat exchanger assemblies 132, 134 is formed with a central aperture to accomodate the shaft 24.

Each of the heat exchangers 132, 134 is of similar construction and accordingly only one will be decribed in detail. The heat exchanger 132 is formed from a pair of spaced parallel plates 140, 142 of generally circular shape. The plates 140, 142 are maintained in spaced relation by a honeycomb structure 144 that has open mesh partitions to permit the flow of fluid between the plates whilst maintaining a structural connection between them. An inlet 146 is associated with each heat exchanger and passes through the side wall 118 of the housing. At a diametrically opposed location, an outlet 148 is provided so that coolant may flow from the inlet 146 through the honeycomb structure between the plates 140 and 142 to the outlet 148.

The space between the heat exchangers 132, 134 and the walls 118 is sealed by spacers 149 located in each corner of the housing 112. An aperture 151 is provided in one of the spacers associated with each heat exchanger to permit flow of fluid from one side of the heat exchanger to the other. Successive apertures 151 are arranged in diagonally opposite corners of the housing 112 so that fluid flowing through the housing 112 is caused to flow across each of the ehat exchangers 132, 134.

Each of the plates 140, 142 has an outwardly directed heat exchange surface 150 that contacts the fluid provided through the inlet 120. To inhibit the depostion of ice upon the surfaces 150, an agitator assembly is connected to the shaft 124. The agitator assembly consists of a series of disks 152, 154, 156 that are secured to the shaft 124 for rotation therewith. The disk 152 is located between the heat exchanger 132 and the upper end plate 114; the disk 154 is located between the two heat exchangers 132, 134 and the lower disk 156 is located between the heat exchanger 134 and the lower end plate 116.

Extending from each of the disks 152 toward a respective one of the surfaces 150 is a pair of blades 158. The blades 158 are pivotally conencted to the disk 152 by a hinge 157 and in the operative position are inclinded to the plane of the disk. The blades 158 terminate in a bevelled edge 160 that is in a scraping relationship with the surface 150. The blades 158 are generally rectangular in shape and are acomodated in a rectangular slot 159 in the surface of the disk. The blades 158 are biased into engagement with the surface 150 by flow of fluid past the blades upon rotation of the shaft 124. Resilient biasing means such as torsion springs may by incorporated into the hinge 157 to bias the blades toward the respective surface 150.

The disks 152, 156 each carry a pair of blades 158 directed to the upper heat exchange surface 150 of the heat exchanger 132 and lower heat exchanger surface 150 of the heat exchanger 134 respectively. The disk 154 carries two pairs of blades 158, one pair directed to the undersurface of the heat exchanger 132 and the other pair directed to the upper heat exchange surface 150 of the heat exchange 134. Each pair of blades is aligned on a diameter of the disk with the two pairs disposed at $90^\circ$ to one another.

In operation, brine is fed to the inlet 120 and circulates through the housing 112, around the heat exchangers 132, 134 through the apertures 151 to the outlet 122.

The primary refrigerant, usually Freon, is introduced through the inlet 146 of each of the heat exchangers 132, 134 from the condenser 30 where it flows through the heat exchanger to the outlet 144. As the Freon passes through the heat exchanger it absorbs heat through the heat exchange surfaces 150 and boils. The brine in contact with the heat exchange surfaces is thus supercooled. To avoid deposition of the ice on the surface 150 which would inhibit further heat transfer, the agitator assembly is rotated by the shaft 124. Rotation of the shaft 124 rotates the disk 152 and thereby sweeps the blades 158 over their respective

8

heat exchange surfaces 150. The movement of the blades removes the super cooled brine from adjacent the surfaces 150 and distributes it through the body of the brine solution. The super cooled brine will crystalise on centres of crystallisation present in the solution and in turn act as new centres of crystallisation to generate three dimensional crystallisation of the water within the brine solution and thus promote the formation of ice in a crystalline manner. The brine solution with the crystallized ice in suspension is extraced from the outlet 122 where it may be passed to a separating tower (20) for removal of the balance of the brine solution and conveyed to a storage device or directly to the use for the ice or directed to the thermal storage heat exchanger 52.

The disposition of the heat exchanger in a plane normal to the axis of rotation of the shaft 124 facilitates the modular expansion of the ice making machine for increased capacity without imposing significant additional structural loads upon the apparatus.

It is anticipated that the capacity of the device utilising a pair of heat exchangers with a diameter of 30 inches (0.76m) would be 6-12 tons per day. The plates 50 would typically be between 3/8 - 1 inch (1-2.5cm) thick to provide good heat transfer between the coolant and the brine solution with the honeycomb partitions 144 providing the required strength.

The shaft 124 will be rotated at 150-400 rpm with a throughput of 9-18 gallons per minute ($0.54-1\ ls^{-1}$).

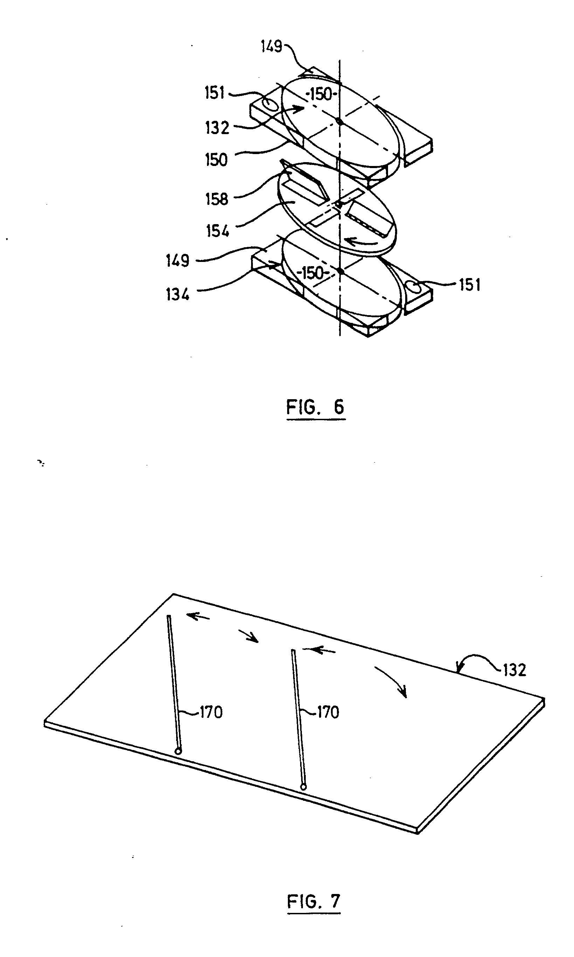

If desired, the surfaces 50 may be coated with a release agent to inhibit the deposition of ice on the surface. Such a coating may typically be polytetrafluorothylene, or a silicone water repellant liquid such as Dow Corning Latex, Silicone 804 or Silicone 890. These may be painted and baked on in accordance with the normal use of such coatings. If coatings are utilised then the blades 58 may act as wipers rather than scapers as the coating will in itself discourage the deposition of the crystals. Figure 7 shows schematically an alternative arrangement of the heat exchange and agitators in which the disks 152, 154 and 156 are replaced by oscillating wipers 170. The wipers may be driven by any suitable form of oscillating mechanism, but again their axes of rotation are normal to the plane of the heat exchanger assembly.

It will be appreciated that the blades 158 may be supported on any convenient carrier assembly connected to the shaft 124, such as a spider arrangement, rather than the discs 152, 154, 156. Further the plates 140, 142 may be maintained in spaced relationship by studs extending between and normal to the plates 140, 142. Whilst the additional surface area provided by the honeycomb portion 44 is considered beneficial, satisfactory results may be obtained by utilising the studs and a coating on the interior of the plates to promote heat transfer. Such a coating is available from Union Carbide under the trade name High Flux coating.

## Claims

1. A method for continuously making ice in a container having a wall (150) and means for continuously cooling said wall of the container, comprising the steps of:

   making an aqueous solution wherein the solute is nontoxic and the initial concentration is less than the eutectic concentration;

   containing the solution within said container, the solution being in heat exchange relation with the wall of the container;

   continuously cooling the wall (150) of the container to cool the layer of solution immediately adjacent the side wall no more than 1° C below its freezing point with a refrigerant at a rate of at least $4.5 \times 10^4\ KWm^{-2}$ (4000 $BTU.ft^{-2}h^{-1}$)

   wherein a blade (158) is continuously moved across the wall to carry the cooled layer of solution at said wall towards the centre of the container, the rate of movement of the blade across said wall being fast enough to carry the cooled layer of solution at the walls towards the centre of the container as aforesaid before the cooled layer is crystallised into a layer of ice whereby to maintain the temperature of the solution substantially uniformly throughout the container below its freezing point and form ice crystals of harvestable size suspended throughout the body of the mixture in the container;

   harvesting ice crystals from suspension in said solution; and

   continuously replenishing said solution in said container as said ice crystals are removed,

   characterised in that the blade (158) is moved in close contact with said wall.

2. A method as claimed in claim 1, characterised in that said solution is brine.

3. A method as claimed in any preceding claim, characterised in that the harvesting of ice is effected by pumping said solution with ice in suspension from said container, and mechanically separating and removing the ice, the rate of forming of the ice being at a speed to cause their formation in the container as the mixture is continuously pumped as aforesaid, the said solution after separation of the ice therefrom being returned to said container.

4. A method as claimed in any preceding claim, characterised in that said solution is replenished by adding make-up solution adjusted to duplicate the initial concentration to replace mixture removed therefrom by the removal of ice.

5. A method as claimed in any preceding claim, characterised in that the temperature of said solution is maintained at not more that 0.2°C below the freezing point.

6. A method as claimed in any preceding claim, characterised in that the solute is selected from the group comprising: salt, glycerine, propylene glycol, ethanol or calcium chloride.

7. A method as claimed in any preceding claim, characterised in that the interval between successive removals of said portion from said wall is not less that 0.00143 minutes.

8. An ice making machine comprising a housing to receive a solution from which ice is to be made and having an outlet to permit the egress ice from said housing,
a heat exchanger located within said housing and having a coolant inlet (120) and a coolant outlet (122) to permit flow of coolant to extract heat from said solution at a rate of $4.5 \times 10^4 \text{KWm}^{-2}$ (4000 $\text{BTU.ft}^{-2}\text{h}^{-1}$) and including at least one heat exchange surface (150) separating coolant from said solution,
a container in said housing to fill substantially said housing and cover said heat exchange surface,
wherein the machine further comprises blade means (158) movable about an axis to move across said surface, and drive means (124), (130) operable upon said blade means to drive said blade means across said surface at a speed such that successive passes of said blade means remove a cooled layer prior to crystallization of ice on said surface, said blade means being configured to discharge fluid from said surface into the body of fluid in said housing to maintain a substantially uniform temperature therein.
characterised in that the blade means is moveable in close contact with said surface.

9. An ice making machine as claimed in Claim 8, characterised in that said surface extends transverse to said axis.

10. An ice making machine as claimed in Claim 9, characterised in that said blade means includes a plurality of blades each movable about said axis to sweep respective said surfaces.

11. An ice making machine as claimed in Claim 10 characterised in that said blades are inclined to their respective heat exchange surfaces.

12. An ice making machine as claimed in Claim 11, characterised in that said blades are connected to a shaft passing through said housing and rotatable on said axis and said blades are movable about an axis parallel to said heat exchange surface.

13. An ice making machine as claimed in Claim 12, characterised in that said blades are pivoted disks connected to said shaft for rotation therewith.

14. An ice making machine as claimed in Claim 16, characterised in that leading edges of said blades are bevelled to facilitate removal of ice depositions from said heat exchange surfaces.

15. An ice making machine as claimed in any of Claims 8 to 14 including two heat exchange surfaces directed toward one another and said blade assembly includes two pairs of blades (158) supported on a common carrier (154) and rotatable in unison, one pair of blades being directed toward one of said heat exchangers and the other pair of blades being directed toward the other heat exchanger.

16. An ice making machine as claimed in Claim 15, characterised in that each of said blades are movable

EP 0 168 537 B1

about an axis parallel to said heat exchange surface into engagement with said surface.

17. An ice making machine as claimed in Claim 16, characterised in that said common carrier (154) is a disc supported by a rotatable shaft extending through said housing.

18. An ice making machine as claimed in Claim 17, characterised in that said blades are inclined to the plane of the disks.

19. An ice making machine as claimed in Claim 18, characterised in that each of said heat exchange surfaces is coated with a water repellent coating.


## Revendications

1. Procédé pour la production en continu de glace dans un conteneur comportant une paroi (150) et des moyens pour réfrigérer de façon continue ladite paroi du conteneur, le procédé comportant les opérations suivantes:
   - on mélange une solution aqueuse dans laquelle le soluté est non toxique et la concentration initiale étant inférieure à la concentration eutectique
   - on verse la solution dans ledit conteneur, la solution étant soumise à échange thermique avec la paroi du conteneur
   - on refroidit de façon continue la paroi (150) du conteneur pour refroidir la couche la solution immédiatement voisine de ladite paroi jusqu'à une température n'excédant pas $1°C$ en dessous de la température de congélation en utilisant un réfrigérant avec un débit horaire qui ne soit pas inférieur à $4,5 \times 10^4 KWm^2$,
   et dans lequel une lame (158) est déplacée de façon continue en parcourant la paroi pour transporter la couche refroidie de la solution contre ladite paroi vers le centre du conteneur, le mouvement de la lame balayant ladite paroi étant suffisamment rapide pour transporter la couche refroidie de solution présente sur la paroi vers le centre du conteneur comme indiqué ci-dessus, avant que la couche refroidie soit cristallisée pour former une couche de glace, ceci tout en maintenant la température de la solution de façon sensiblement uniforme dans l'ensemble du conteneur en dessous de son point de congélation et en formant des cristaux de glace de dimensions susceptibles d'être récoltés et en suspension à travers le corps du mélange dans le conteneur,
   - on récolte les cristaux de glace de ladite suspension dans ladite solution et,
   - on renouvelle de façon continue ladite solution dans ledit conteneur au fur et à mesure que les cristaux de glace sont prélevés,
   caractérisé en ce que la lame (158) est déplacée en contact étroit avec ladite paroi.

2. Procédé tel que revendiqué dans la revendication 1, caractérisé en ce que ladite solution est de la saumure.

3. Procédé tel que revendiqué dans l'une quelconque des revendications 1 ou 2, caractérisé en ce que la récolte de glace est effectuée par pompage de ladite solution contenant la glace en suspension depuis le conteneur et on sépare mécaniquement et l'on retire la glace, le débit de formation de la glace étant à une vitesse propre à permettre sa formation dans le conteneur au fur et à mesure que le mélange est pompé de façon continue comme indiqué précédemment, ladite solution, après séparation de la glace, étant recyclée vers ledit conteneur.

4. Procédé tel que revendiqué dans l'une quelconque des revendications 1 à 3, caractérisé en ce que ladite solution est renouvelée par addition d'une solution d'appoint ajustée de façon à reproduire la concentration initiale pour remplacer le mélange retiré de ladite concentration par extraction de glace.

5. Procédé tel que revendiqué dans l'une quelconque des revendications 1 à 4, caractérisé en ce que la température de ladite solution est maintenue à une température maximum de $0,2°C$ en dessous du point de congélation.

11

6. Procédé tel que revendiqué dans l'une quelconque des revendications 1 à 5, caractérisé en ce que le soluté est choisi dans le groupe comportant: le sel, la glycérine, le propylène glycol, l'éthanol ou le chlorure de calcium.

7. Procédé tel que revendiqué dans l'une quelconque des revendications 1 à 6, caractérisé en ce que l'intervalle entre deux prélèvements successifs de ladite portion sur ladite paroi n'est pas inférieur à 0,00143 minutes.

8. Machine pour fabriquer de la glace comportant un logement destiné à recevoir une solution à partir de laquelle la glace est fabriquée et ayant une sortie pour permettre l'évacuation de la glace depuis ledit logement, un échangeur de chaleur situé à l'intérieur dudit logement et ayant une entrée de réfrigérant (120) et une sortie de réfrigérant (122) pour permettre au courant de réfrigérant d'extraire la chaleur depuis ladite solution à un débit horaire de $4,5 \times 10^4 KWm^2$ et comportant au moins une surface d'échange thermique (150) séparant le réfrigérant de ladite solution, un conteneur dans ledit logement pour remplir sensiblement ledit logement et couvrir ladite surface d'échange thermique, dans lequel la machine comprend une lame (158) déplaçable selon un axe pour parcourir ladite surface et des moyens d'entraînement (124, 130) aptes à agir sur ladite lame pour parcourir ladite surface à une vitesse telle que les passes successives de ladite lame retire une couche refroidie avant la cristallisation de glace sur ladite surface, ladite lame étant conformée de façon à déplacer le fluide depuis ladite surface vers le coeur du fluide dans ledit logement en vue de maintenir une température sensiblement uniforme à l'intérieur de ce dernier, caractérisée en ce que ladite lame est déplaçable en contact étroit avec ladite surface.

9. Machine à fabriquer la glace telle que revendiquée selon la revendication 8, caractérisée en ce que ladite surface s'étend transversalement par rapport audit axe.

10. Machine à fabriquer la glace telle que revendiquée dans la revendication 9, caractérisée en ce qu'elle comporte une pluralité de lames chacune étant déplaçable selon ledit axe pour balayer respectivement lesdites surfaces.

11. Machine à fabriquer la glace telle que revendiquée dans la revendication 10, caractérisée en ce que lesdites lames sont inclinées par rapport à leurs surfaces d'échange thermique respectives.

12. Machine à fabriquer la glace telle que revendiquée dans la revendication 11, caractérisée en ce que lesdites lames sont solidaires d'un arbre passant à travers ledit logement et elles sont montées rotatives sur ledit axe, lesdites lames étant déplaçables selon un axe parallèlement à ladite surface d'échange thermique.

13. Machine à fabriquer la glace telle que revendiquée dans la revendication 12, caractérisée en ce que lesdites lames sont constituées de disques pivotants reliés audit arbre pour leur mise en rotation avec cet arbre.

14. Machine à fabriquer la glace telle que revendiquée dans la revendication 13, caractérisée en ce que les bords d'attaque desdites lames sont biseautés pour faciliter l'enlèvement des dépôts de glace depuis lesdites surfaces d'échange thermique.

15. Machine à fabriquer la glace telle que revendiquée dans l'une quelconque des revendications 8 à 14, comportant deux surfaces d'échange thermique se faisant face l'une l'autre et l'ensemble de lames comporte deux paires de lames (158) montées sur un support commun (154) et rotatives ensembles, une paire de lames étant dirigée vers l'un des échangeurs de chaleur et l'autre paire étant dirigée vers l'autre échangeur de chaleur.

16. Machine à fabriquer la glace telle que revendiquée dans la revendication 15, caractérisée en ce que chacune desdites lames est déplaçable selon un axe parallèlement à ladite surface d'échange thermique et en engagement avec ladite surface.

**17.** Machine à fabriquer la glace telle que revendiquée dans la revendication 16, caractérisée en ce que ledit support commun (154) est constitué d'un disque supporté par un arbre rotatif s'étendant à travers ledit logement.

**18.** Machine à fabriquer la glace telle que revendiquée dans la revendication 17, caractérisée en ce que lesdites lames sont inclinées par rapport au plan des disques.

**19.** Machine à fabriquer la glace telle que revendiquée dans la revendication 18, caractérisée en ce que chacunes des surfaces d'échange thermique est revêtue d'un revêtement hydrophobe.

### Ansprüche

**1.** Verfahren zur kontinuierlichen Herstellung von Eis in einem Behälter, der eine Wand (150) und Mittel zum kontinuierlichen Kühlen der Wand des Behälters aufweist, umfassend die Schritte:
Herstellung einer wäßrigen Lösung, in der der gelöste Stoff nicht toxisch und die Anfangskonzentration niedriger als die eutektische Konzentration ist;
Aufbewahren der Lösung im Behälter, wobei die Lösung in wärmeaustauschender Beziehung mit der Wand des Behälters steht;
kontinuierliches Kühlen der Wand (150) des Behälters, um die Schicht der Lösung unmittelbar benachbart zu der Seitenwand auf nicht mehr als 1 °C unterhalb ihres Gefrierpunktes mittels eines Kühlmittels mit einer Rate von mindestens $4,5 \times 10^4$ KWm$^{-2}$ (4000 BTU.ft$^{-2}$h$^{-1}$)zu kühlen,
wobei ein Blatt (158) kontinuierlich über die Wand bewegt wird, um die gekühlte Schicht der Lösung an der Wand zur Mitte des Behälters zu transportieren, wobei die Bewegungsrate des Blattes über die Wand ausreichend schnell ist, um die gekühlte Schicht der Lösung an den Wänden in der genannten Weise in Richtung auf die Mitte des Behälters zu bewegen, bevor sich die gekühlte Schicht zu einer Lage aus Eis auskristallisiert, so daß die Temperatur der Lösung im gesamten Behälter im wesentlichen gleichförmig unterhalb des Gefrierpunktes bleibt und im Behälter in der Mischung schwebend verteilte Eiskristalle gewinnbarer Größe bildet,
Gewinnen der Eiskristalle aus ihrem Schwebezustand in der Lösung und
kontinuierliches Ergänzen der Lösung im Behälter, wenn die Eiskristalle entfernt werden,
**dadurch gekennzeichnet,** daß das Blatt (158) in enger Berührung mit der Wand bewegt wird.

**2.** Verfahren nach Anspruch 1, **dadurch gekennzeichnet,** daß die Lösung eine Salzlösung ist.

**3.** Verfahren nach einem der vorhergehenden Ansprüche, **dadurch gekennzeichnet,** daß das Gewinnen des Eises durch Pumpen der Eis im Schwebezustand enthaltenden Lösung aus dem Behälter und mechanisches Trennen und Entfernen des Eises erfolgt, wobei die Rate der Eisbildung eine Geschwindigkeit hat, durch die die Bildung im Behälter bewirkt wird, wenn die Mischung kontinuierlich in der genannten Weise gepumpt wird, und wobei die Lösung nach Abtrennung des Eises aus ihr in den Behälter zurückgeführt wird.

**4.** Verfahren nach einem der vorhergehenden Ansprüche, **dadurch gekennzeichnet,** daß die Lösung durch Zuführung einer aufbereiteten Lösung, die so eingestellt ist, daß sie die anfängliche Konzentration verdoppelt, ersetzt wird, um die durch das Entfernen von Eis entfernte Mischung zu ersetzen.

**5.** Verfahren nach einem der vorhergehenden Ansprüche, **dadurch. gekennzeichnet,** daß die Temperatur der Lösung auf nicht mehr als 0,2 °C unterhalb des Gefrierpunmktes gehalten wird.

**6.** Verfahren nach einem der vorhergehenden Ansprüche, **dadurch gekennzeichnet,** daß das gelöste Material aus der Gruppe von Salz, Glycerin, Propylenglykol, Äthanol oder Kalziumchlorid gewählt wird.

**7.** Verfahren nach einem der vorhergehenden Ansprüche, **dadurch gekennzeichnet,** daß das Intervall zwischen dem aufeinanderfolgenden Entfernen der Bereiche von der Wand nicht weniger als 0,00143 Minuten beträgt.

**8.** Eisherstellungsmaschine mit einem Gehäuse zur Aufnahme einer Lösung, aus der das Eis hergestellt wird, und mit einem Anslaß zum Austritt von Eis aus dem Gehäuse,
mit einem im Gehäuse angeordneten Wärmetauscher, der einen Kühlmitteleinlaß (120) und einen Kühlmittelauslaß (122) für den Strom von Kühlmittel für das Abziehen von Wärme aus der Lösung mit einer Rate von $4,5 \times 10^4$ KWm$^{-2}$ (4000 BTU.ft$^{-2}$h$^{-1}$) aufweist,sowie mit mindestens einer Wärmetauscherfläche (150), die das Kühlmittel von der Lösung trennt,
mit einem im Gehäuse vorgesehenen Behälter, der das Gehäuse im wesentliochen ausfüllt und die Wärmetauscherfläche abdeckt,
wobei die Maschine außerdem um eine Achse bewegbare Blattmittel (158) zur Bewegung über die Fläche und Antriebsmittel (124), (130) aufweist, die auf die Blattmittel wirken, um diese mit einer solchen Geschwindigkeit über die Fläche zu bewegen, daß aufeinander folgende Durchläufe der Blattmittel eine gekühlte Schicht entfernen, bevor Eis auf der Fläche kristallisiert, wobei die Blattmittel so ausgebildet sind, daß sie Fluid von der Fläche in das im Gehäuse befindliche Fluid abgeben, um eine im wesentlichen gleichförmige Temperatur in diesem aufrechtzuerhalten,
**dadurch gekennzeichnet,** daß die Blattmittel in enger Berührung mt der Fläche bewegbar sind.

9. Eisherstellungsmaschine nach Anspruch 8, **dadurch gekennzeichnet,** daß sich die Fläche quer zu der Achse erstreckt.

10. Eisherstellungsmaschine nach Anspruch 9, **dadurch gekennzeichnet,** daß die Blattmittel mehrere Blätter aufweisen, von denen jedes um die Achse bewegbar ist, um die Flächen zu überstreichen.

11. Eisherstellungsmaschine nach Anspruch 10, **dadurch gekennzeichnet,** daß die Blätter zu ihrer zugehörigen Wärmetauscherfläche geneigt sind.

12. Eisherstellungsmaschine nach Anspruch 11, **dadurch gekennzeichnet,** daß die Blätter mit einer Welle verbunden sind, die sich durch das Gehäuse erstreckt und um die Achse drehbar ist, und daß die Blätter um eine Achse parallel zur Wärmetauscherfläche bewegbar sind.

13. Eisherstellungsmaschine nach Anspruch 12, **dadurch gekennzeichnet,** daß die Blätter schwenkbare Scheiben sind, die zur Drehung der Welle mit dieser verbunden sind.

14. Eisherstellungsmaschine nach Anspruch 16, **ddadurch gekennzeichnet,** daß die Vorderkanten der Blätter abgeschrägt sind, um das Entfernen von Eisablagerungen von Wärmetauscherflächen zu erleichtern.

15. Eisherstellungsmaschine nach einem der Ansprüche 1 bis 14, enthaltend zwei einander zugewandte Wärmetauscherflächen und eine Blattanordnung mit zwei Paaren von Blättern (158), die auf einem gemeinsamen Träger (154) gehalten und zusammen drehbar sind, wobei ein Paar von Blättern dem einen der Wärmetauscher und das andere Paar von Blättern dem anderen Wärmetauscher zugewandt ist.

16. Eisherstellungsmaschine nach Anspruch 15, **dadurch gekennzeichnet,** daß jedes der Blätter um eine Achse parallel zur Wärmetauscherfläche in Eingriff mit dieser Fläche bewegbar ist.

17. Eisherstellungsmaschine nach Anspruch 16, **dadurch gekennzeichnet,** daß der gemeinsame Träger eine Scheibe ist, die von einer drehbaren, sich durch das Gehäuse erstreckenden Welle getragen wird.

18. Eisherstellungsmaschine nach Anspruch 17, **dadurch gekennzeichnet,** daß die Blätter zur Ebene der Scheiben geneigt sind.

19. Eisherstellungsmaschine nach Anspruch 18, **dadurch gekennzeichnet,** daß jede der Wärmetauscherflächen mit einer wasserabstoßenden Beschichtung beschichtet ist.

FIG. 1

EP 0 168 537 B1

FIG. 2

ICE
OUT

ICE
SEPERATOR

20

18

WATER

CIRCULATION
TANK

64

22

COMPRESSOR

32

CONDENSOR

30

12    28

DASHER

26

FREEZER

10    66

23

CONCENTRATOR

14    PUMP

29
WATER SUPPLY.

EP 0 168 537 B1

16

FIG 3

FIG. 4

FIG. 5

FIG. 6

FIG. 7

19